# EUROPEAN PATENT APPLICATION

(11) **EP 2 173 096 A1**
(43) Date of publication of application: **07.04.2010**
(21) Application number: 08164101.1
(22) Date of filing: 10.09.2008
(51) Int. Cl.: H04N 7/01

(54) **Video type classification**

(71) Applicant: Tektronix International Sales GmbH, 8212 Neuhausen am Rheinfall Schaffhausen (CH)
(72) Inventor: Barton, Oliver, Newport NP20 3PX (GB); Elangovan, Premkumar, Bristol BS1 6PL (GB)
(74) Representative: Wardle, Callum Tarn

(57) **Abstract**

A video classification method includes detecting pulldown video frames from within a sequence of video frames, for each video frame within said sequence identifying those frames containing inter-field motion, for each frame containing inter-field motion generating a corresponding top field and bottom field, separately correlating the generated top field with a top field of the video frame immediately previous to the frame containing inter-field motion and with a top field of the video frame immediately subsequent to the frame containing the inter-field motion, separately correlating the generated bottom field with a bottom field of the immediately previous video frame and with a bottom field of the immediately subsequent video frame and determining from the outcome of said correlations if the frame containing inter-field motion is a pulldown frame.

## Description

Video data may be classified as interlaced, progressive or, particularly where multiple video streams have been edited together, a mixture of both interlaced and progressive video, which is referred to herein as hybrid video. In an interlaced video sequence each frame of the video is made up from two separate fields, one field containing all of the evenly numbered horizontal lines of pixels, referred to as the top field, and the second field containing the even numbered horizontal lines of pixels, referred to as the bottom field. The top and bottom fields represent separate instances in time, i.e. one field is captured at a first instance in time and the second field is captured at a second, subsequent, instance in time. In a progressive video sequence the two fields of each frame belong to the same instance in time.

A particular type of interlaced video is telecine or pulldown video. Telecine is a process by which video material originating from film is converted to an interlaced format to be displayed on television equipment. As the original film material is generally shot at 24 full frames per second (fps), and which therefore can be considered as progressive image data, the conversion to telecine video requires a frame rate conversion, particularly for NTSC format, since NTSC and PAL video is played at approximately 30 fps (30,000/1,001) and 25 fps respectively. Although it would be possible to simply increase the speed of playback of the original film material, this is generally quite easy to detect visually and audibly, especially for NTSC playback where the increase from 24 fps to approximately 30 fps represents an approximately 25% increase in playback speed. Consequently, a technique is used to increase the number of frames per second displayed that involves inserting one or more extra frames of image data on a repeated basis to increase the total number of frames to be displayed. Generally, this involves generating the extra frames using information from one or more of the original adjacent frames of image data. For NTSC conversion, this is achieved by converting every four frames of image data to their equivalent eight fields (top and bottom field pairs) and then repeating at least two of the individual fields to generate the required number of extra frames. The extra frames generated using duplicated fields are referred to as either pulldown frames or dirty frames.

For PAL conversion two additional frames are generated for every twelve original frames to achieve the 24 fps to 25 fps frame rate conversion required.

Reverse telecine is the opposite process in which the pulldown frames are removed and the original 24 fps material is reconstructed. This may be required where the video data is to be displayed on a progressive display that is able to support the 24 fps frame rate or alternatively where the telecine video data is to be compressed, for example prior to data storage or transmission, and is therefore more efficient in terms of the compression to remove the dirty frames since they are redundant by virtue of being generated from image data already present. A problem arises when it is not known what type of video data is being presented as source data to a reverse telecine process. For example, it is normal practice for many television programmes for many different video sources to be edited together, the different video sources possibly being a mixture of progressive, interlaced or hybrid video. A problem therefore exists in being able to identify the different types of video data present within a source video data stream that is to have a reverse telecine process applied.

According to a first aspect of the present invention there is provided a method of detecting pulldown video frames from within a sequence of video frames, the method comprising: for each video frame within said sequence identifying those frames containing inter-field motion; for each frame containing inter-field motion generating a corresponding top field and bottom field; separately correlating the generated top field with a top field of the video frame immediately previous to the frame containing inter-field motion and with a top field of the video frame immediately subsequent to the frame containing the inter-field motion; separately correlating the generated bottom field with a bottom field of the immediately previous video frame and with a bottom field of the immediately subsequent video frame; determining from the outcome of said correlations if the frame containing inter-field motion is a pulldown frame.

The step of determining the outcome of the correlations may comprise determining the difference between the correlation of the bottom field of the video frame containing inter-field motion with the bottom field of the immediately previous video frame and the correlation of the top field of the video frame containing inter-field motion with the top field of the immediately previous video frame, determining the difference between the correlation of the top field of the video frame containing interfield motion with the top field of the immediately subsequent video frame and the correlation of the bottom field of the video frame containing inter-field motion with the bottom field of the immediately subsequent video frame and when both difference values exceed a predetermined threshold value determining that said video frame containing inter-field motion is a pulldown frame.

Additionally, when both difference values do not exceed the threshold value said video frame may be determined to be an interlaced video frame.

The correlation may comprise correlating any one of Peak Signal to Noise Ratio, Mean Absolute Deviation and Sum of Absolute Errors.

According to a further aspect of the present invention there is provided a method of classifying a group of video frames, the method comprising: detecting the pulldown frames contained within the group according to the method of the first aspect of the present invention and classifying those frames as pulldown frames, classifying the remaining frames containing inter-field motion as interlaced frames and classifying the non-pulldown and non-interlaced frames as progressive frames; classifying the group of video frames according to a combination of the majority classification of the separate video frames in the group and the presence of known sequences of individual frames.

The pattern matching may be applied to the classified frames in a group if the group includes both pulldown frames and progressive frames.

Additionally, the pattern matching may comprise identifying the presence of known sequences of progressive and pulldown frames, said known sequences being consistent with telecine video.

Additionally, a group of frames containing more than one known sequence of progressive and pulldown frames may be classified as broken telecine.

Embodiments of the present invention are described below, by way of illustrative non-limiting example only, with reference to the accompanying drawings, of which:
Figure 1 schematically illustrates a forward telecine process;
Figure 2 schematically illustrates the different possible video types and their relative hierarchy that can be classified according to embodiments of the present invention; and

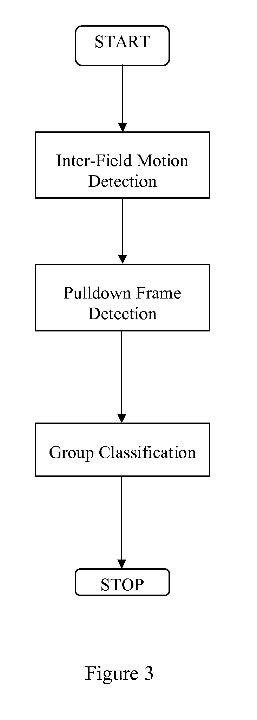

Figure 3 schematically illustrates the methodology of embodiments of the present inventions.

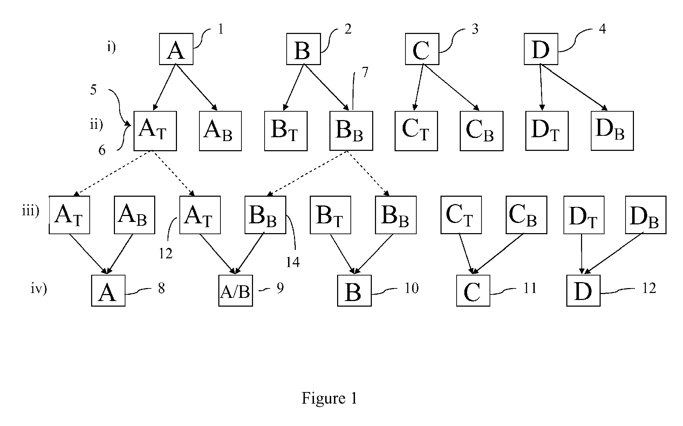

An example of a conventional telecine process is schematically illustrated in Figure 1. In Figure 1 the telecine process is represented at separate steps, (i-iv). In the first step i) for progressive frames 1-4 are provided from the original source material, which in the example to be discussed as frame rate of 24 fps. Frames 1-4 are intended to be displayed sequentially in order. Step ii) involves generating individual fields 5 from each of the original frames 1-4, such that in the example illustrated each of the original frames is decomposed to a top field and a bottom field. In the particular example illustrated in Figure 1 it is assumed that the fields are displayed in top field first order, although it will be understood by those skilled in the art that the field order may be the opposite and is not important to the telecine process. Consequently, the four original frames 1-4 are decomposed to eight individual fields 5. At step iii) individual fields 5 are reordered according to a predefined sequence with two of the fields 6, 7 being duplicated, as indicated by the dashed arrows in Figure 1. Consequently, at step iii) there are now ten fields that in the final step iv) are recombined to produce five full frames 8-12, thus resulting in five final frames for each of the original four frames and therefore increasing the frame rates to 30 fps. However, as indicated in Figure 1 the frame 9 generated from the repeated fields 13-14 is composed of fields representing two separate instances in time, A_{T} B_{B}, and is therefore likely to give rise to combing artefacts when displayed on a progressive display. This generated frame 9 is therefore referred to as a "dirty" frame.

As an aside, the telecine scheme illustrated in Figure 1 may be referred to 3:3:2:2 pulldown telecine, since the individual fields 5 decompose from the original full frames 1-4 are reproduced following the 3:3:2:2 order to generate the technical individual fields from which the final five frames are generated. Referring to Figure 1, it can be seen that the first three fields at step iii) are drawn from the first frame 1 of the original sequence, the next three fields are drawn from the second frame 2, the next two fields are drawn from the third frame 3, whilst the final two frames are drawn from the fourth frame 4. An alternative scheme is to arrange the individual fields according to a 3:2:3:2 pattern, from which the generic term of 3:2 pulldown for 24 fps to 30 fps telecine is derived. However, using this latter scheme would generate ten fields at step iii) in the following order: A_{T} A_{B}, A_{T} B_{B}, B_{T} C_{B}, C_{T}, C_{B}, D_{T} D_{B}, from which it can be deduced that in the final frame sequence for every five frames two frames will be "dirty" frames, as opposed to the single dirty frame generated using the 3:3:2:2 scheme.

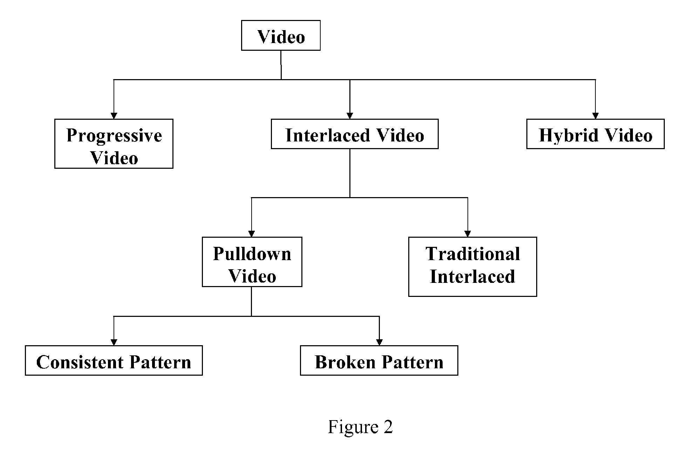

As previously noted it is also common to perform a reverse telecine process on provided video data to either allow the original progressive film data to be displayed on compatible progressive displays or to allow efficient compression to occur. This is easily accomplished if it is known that the source data video is in fact a telecine video and what scheme of telecine has been applied to it. However, it is common for the source video data to be made up from a number of separate sources and therefore contain video data of different types. These video types can be arranged in a general hierarchy, as illustrated in Figure 2. As previously noted, generic video data may include either progressive video, interlaced video or hybrid video. The interlaced video can be further subdivided into traditional interlaced, i.e. in which the source material was captured in an interlaced, time differentiated field manner, and telecine or pulldown video, such as 3:2 telecine the type discussed in relation to Figure 1. In addition, the pulldown video can be of a consistent pattern or a broken pattern. If the entirety of the pulldown video segment comprises a single source of the pulldown video such that the pattern of clean and dirty frames and this will be a consistent pattern. In contrast, the segment of pulldown video may include a number of separate sections of pulldown video that have been edited together. Consequently, where the edits have occurred the pattern of clean and dirty frames may change and/or the actual telecine scheme employed may differ between different sections.

It is therefore useful and desirable to determine the different types of video data present either before or during a reverse telecine process. In particular, it is desirable to be able to determine between the traditional interlaced video data and the actual pulldown video data. To accomplish this determination it is therefore necessary to be able to identify the presence of any dirty frames within the video segment, those dirty frames being indicative of the presence of pulldown video.

According to embodiments of the present invention a method for the detection of the video type includes as an initial step detecting the presence of any combing artefacts in individual frames, since the presence of combing artefacts indicates that the frame is either traditional interlaced or pulldown video. A method of determining and quantifying any inter-field motion (which gives rise to the combing artefacts) in a video frame is described in European patent application no. 08251399.5, also filed by the present applicant. This method processes each video frame by taking the top and bottom fields for each frame and interpolating the top and bottom fields to produce interpolated top and bottom field images and subsequently comparing the interpolated top and bottom field images to each other to determine a value representative of the amount of inter-field motion present between the top field and bottom field. The interpolated top field image may be produced by averaging adjacent lines of the top field with a line of the bottom field which is intermediate the adjacent lines of the top field, and the interpolated bottom field image may be produced by averaging adjacent lines of the bottom field image with a line of the top field image that is intermediate the adjacent lines of the bottom field image. Comparison of the interpolated top and bottom field images is performed by subtracting luminance values of the pixels of one of the interpolated images from luminance values of corresponding pixels of the other of the interpolated images to generate a difference domain frame. If the original video frame from which the interpolated top and bottom and field images were generated is a true progressive frame and then there will only be a very small difference between the interpolated top and bottom field images, differing from noise, compression, interpolation, approximation and vertical differences. If a large difference is found over the entirety of the frame then it can be classified as containing inter-field motion arising from either being a traditional interlaced or being telecine or pulldown frame.

The above method of determining the presence or absence of inter-field motion within each frame is merely one applicable method and other known methods for identifying inter-field motion may be used within the scope of embodiments of the present invention.

In a subsequent step of the method of the present invention a determination is made as to whether the frame containing the inter-field motion is either interlaced or a "dirty" pulldown frame. The determination is made by performing a correlation between the fields of the current frame under analysis and the fields of both the previous and future frames. Four correlations are calculated as follows:
C1 = correlation (current frame bottom field, previous frame bottom field)
C2 = correlation (current frame top field, previous frame top field)
C3 = correlation (current frame top field, future frame top field)
C4 = correlation (current frame bottom field, future frame bottom field)

If modulus, (C1-C2) or modulus (C3-C4) is greater than a predetermined threshold value then the current frame is considered to have a repeated field, i.e. be a dirty pulldown frame.

For example, considering the example illustrated in Figure 1 and taking the final generated frame A/B as the current frame then it can be seen from the corresponding individual fields that C1 = correlation (B_{B}, A_{B}), C2 = correlation (A_{T}, A_{T}), C3 = correlation (A_{T}, B_{T}) and C4 = correlation (B_{B}, B_{B}) and therefore the correlation values C1 and C3 will be low, whilst the correlation values C2 and C4 will be high.

Any objective correlation metric may be used, for example PSNR (peak signal to noise ratio), MAD (mean absolute deviation) or SAE (sum of absolute errors). In one embodiment to the present invention the correlation is carried out using PSNR as the correlation metric and if the correlation difference between the fields of successive frames (i.e. the modulus values) is greater than 8 db then the frame is considered to have a repeated field.

To reduce the influence of false positives (i.e. frames incorrectly identified as interlaced or telecine) the frame data is subsequently processed in groups of frames, for example groups of 100 frames. The number of frames per group may be the figure and may be chosen in dependence upon some prior knowledge of the source video data. However, 100 frames for a frame display rate of 25 fps allows the video type information to be provided for every 4 seconds of video and it is unlikely for normal broadcast for edited segments to be of less than 4 second duration. In fact a segment will tend to be longer than this. The classification of each group of frames is based on a combination of a simple majority of individual frame classifications and the outcome of certain pattern matching algorithms. For example, a majority of frames being classified as being progressive does not necessarily preclude that group from having a pulldown pattern, since progressive frames are a constituent part of a pulldown pattern. However, true interlaced frames and pulldown frames should not be in the same group and in this instance the majority of the two frame types will govern the classification of the group. If a group contains frames being classified as pulldown frames then one or more pattern matching algorithms may be applied to the group of frames to determine if the group can be classified as a pulldown group as a whole. For example, a regular occurrence of four progressive frames followed by a single pulldown frame will be taken as indicative of the 3:2 pulldown pattern illustrated with reference to Figure 1. In this instance, sub-groups of five frames can be analysed and classified and a majority decision based on the classification of the sub-groups may be made for the group as a whole. Alternatively, other known patterns may be looked for, such as 12:2 pulldown. Possible outputs for each group of frames includes progressive, telecine pattern 1 (e.g. ptppp), telecine pattern 2 (e.g. pttpp) and telecine broken (e.g. ptppp, pttpp), the latter indicating the occurrence of an edit within the group.

Advantages of the embodiments of the present invention include the use of only immersed immediate neighbours to the frame of interest in analysing if that frame is a pulldown frame or not. By using only the immediate neighbours to a frame under analysis, as opposed to a series of frames, any spatial or temporal variations across a series of frames do not unduly influence the outcome of the determination, which such variations would influence the outcome if a larger series of frames were used. Similarly, the classification of each group of frames is processed independently and no assumptions are made based on the results for previous groups. This particularly increases the robustness of the method when applied to hybrid video sequences and allows any change in video type due to editing to be easily detected.

## Claims

1. A method of detecting pulldown video frames from within a sequence of video frames, the method comprising:
for each video frame within said sequence identifying those frames containing inter-field motion;
for each frame containing inter-field motion generating a corresponding top field and bottom field;
separately correlating the generated top field with a top field of the video frame immediately previous to the frame containing inter-field motion and with a top field of the video frame immediately subsequent to the frame containing the inter-field motion;
separately correlating the generated bottom field with a bottom field of the immediately previous video frame and with a bottom field of the immediately subsequent video frame;
determining from the outcome of said correlations if the frame containing inter-field motion is a pulldown frame.

2. The method of claim 1, wherein the step of determining the outcome of the correlations comprises:
determining the difference between the correlation of the bottom field of the video frame containing inter-field motion with the bottom field of the immediately previous video frame and the correlation of the top field of the video frame containing inter-field motion with the top field of the immediately previous video frame;
determining the difference between the correlation of the top field of the video frame containing interfield motion with the top field of the immediately subsequent video frame and the correlation of the bottom field of the video frame containing inter-field motion with the bottom field of the immediately subsequent video frame; and
when either difference values exceed a predetermined threshold value determining that said video frame containing inter-field motion is a pulldown frame.

3. The method of claim 2, wherein when both difference values do not exceed the threshold value determining said video frame to be an interlaced video frame.

4. The method of any preceding claim, wherein the correlation comprises correlating any one of Peak Signal to Noise Ratio, Mean Absolute Deviation and Sum of Absolute Errors.

5. A method of classifying a group of video frames, the method comprising:
detecting the pulldown frames contained within the group according to the method of claim 1 and classifying those frames as pulldown frames, classifying the remaining frames containing inter-field motion as interlaced frames and classifying the non-pulldown and non-interlaced frames as progressive frames;
classifying the group of video frames according to a combination of the majority classification of the separate video frames in the group and the presence of known sequences of individual frames.

6. The method of claim 5, wherein pattern matching is applied to the classified frames in a group if the group includes both pulldown frames and progressive frames.

7. The method of claim 6, wherein the pattern matching comprises identifying the presence of known sequences of progressive and pulldown frames, said known sequences being consistent with telecine video.

8. The method of claim 7, wherein a group of frames containing more than one known sequence of progressive and pulldown frames is classified as broken telecine.
